# EUROPEAN PATENT APPLICATION

(11) **EP 2 053 621 A1**
(43) Date of publication of application: **29.04.2009**
(21) Application number: 07792051.0
(22) Date of filing: 06.08.2007
(51) Int. Cl.: H01H 13/02, H01H 11/00, H01H 13/14, H01H 13/702

(54) **KEY SHEET, KEY UNIT HAVING IT, AND KEY SHEET MANUFACTURING METHOD**

(30) Priority: 07.08.2006 JP 2006214383
(71) Applicant: Sunarrow Limited, Tokyo 104-0032 (JP)
(72) Inventor: YOSHIDA, Minoru, Mitsuke-shi, Niigata 954-0076 (JP)
(74) Representative: Betten & Resch
(86) International application number: PCT/JP2007/065381
(87) International publication number: WO 2008/018416

(57) **Abstract**

In order to provide different colors of illumination light to keytops in different areas, there is provided a key sheet 8 having a plurality of pad portions 10, 10, ... provided on a key base 6 made of a transparent or translucent resin and a plurality of keytops 2 provided on the pad portions 10, 10, ..., wherein the key base 6 is divided into a plurality of areas 4₁, 4₂, and 4₃ which includes one or a plurality of pad portions 10, 10, ...; light-blocking portions 18 are provided to boundary regions between the adjacent areas 4, 4 of the key base 6; at least one illumination-light emitting means arrangement portion 14 is provided so as to correspond to each of the areas 4₁, 4₂, and 4₃; and reflecting means 20 which direct light emitted from illumination-light emitting means toward keytop-formed side are entirely or partially arranged in each of the areas 4₁, 4₂, and 4₃ of the key base 6.

## Description

### Technical Field

The present invention relates to an illumination-type key sheet used for an electronic apparatus, for example, a mobile phone, a PHS, a handheld terminal (PDA or the like), a portable audio apparatus, and a remote controller of home electric appliances, and a key unit having thereof, and a method of manufacturing the key sheet.

### Background Art

In key sheets used for electronic apparatuses, for example, a mobile phone, a PHS, a handheld terminal (PDA), a portable audio apparatus, or a remote controller of home electric appliances, many of them have keytops which are illuminated with a predetermined illumination-light emitting means (for example, a light-emitting device including light-emitting diodes). Accordingly, there is an advantage that keys can be visible in a dark place, so that the keys are easy to manipulate.

The applicant has proposed various contrivances about an illumination-type key sheet or a key unit obtained by providing the key sheet on a circuit board or the like, which are disclosed in, for example, Japanese Patent Application Laid-Open No. 2006-013232.

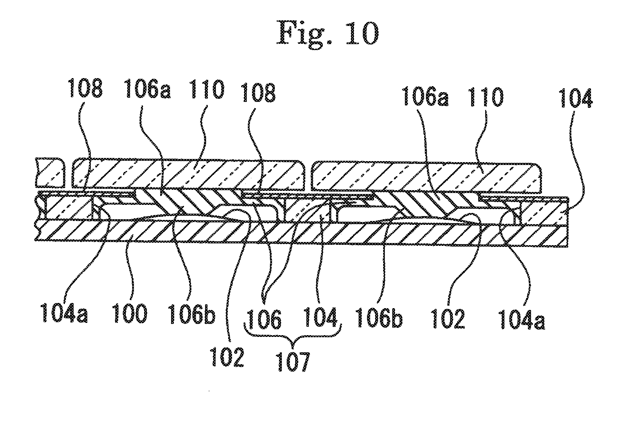

FIG. 10 is a cross-sectional view illustrating a conventional example of a key unit obtained by arranging such a narrow-pitch-type key sheet on a circuit board. In the figure, reference number 100 denotes the circuit board, whose surface is provided with a wiring layer (not shown), an illumination-light emitting means (not shown and including, for example, light emitting diodes), and metal domes 102 (made of, for example, stainless steel) in which switches are disposed.
Reference number 104 denotes a reinforcing plate which constitutes a key base 107 together with key pads 106, 106, ... . The reinforcing plate is made of, for example, a transparent or translucent resin such as polycarbonate, or a metal. The reinforcing plate includes a plurality of key-pad arrangement holes 104a, 104a, ... in which the key pads 106, 106, ... are arranged.

Each of the key pads 106, 106, ... is accommodated in each of the key-pad arrangement holes 104a, 104a, ... of the reinforcing plate 104, outer sides of the key pads 106, 106, ... are secured to inner sides of the key-pad arrangement holes 104a, 104a, ..., and it is reinforced with the reinforcing plate 104, so that a mechanical strength required for the key bases 107 can be obtained.
Reference number 108 denotes light-blocking mask sheets (light-blocking sheets), which are arranged on the key bases 107 (particularly, in a case that the reinforcing plate 104 is made of a transparent or translucent resin). The light-blocking mask sheets are formed under boundary regions between adjacent keytops (110, 110) to block light. The light-blocking mask sheets are made of a light-blocking film or a thin metal plate.

Reference number 110 denotes the key tops, each of which is fixed on an upper surface of a mounting portion 106a of the key pad 106. Reference number 106b denotes push members. In general, the keytops are made of a transparent or translucent resin such as polycarbonate. However, the keytops may be made of a metal or coated with a metal in terms of design or decorative sense.
[Patent Document 1] Japanese Patent Application Laid-Open No. 2006-013232

As shown in FIG. 10, there is a problem that it is difficult to provide different colors of illumination light to a conventional key sheet.
More specifically, there are various types of keys according to functions of the keytops to be pushed, for example, types of showing numbers, alphabets or the like, or types for cursor movement or selection. If different colors of illumination light for the keytops are provided according to the types of keys, a decorative product can be obtained. In addition, since only the keys used for manipulation can be illuminated, there are advantages in that it is possible to easily manipulate the keys and to reduce errors of manipulation.
Accordingly, it is preferable that the different colors of the illumination light for the keytops are provided according to the different types of the keys.

However, for a key unit formed by assembling a conventional key sheet including the key sheet shown in FIG. 10 on a circuit board, the same color (for example, white, green, red, or the like) of light emitted from a plurality of LEDs which are provided as illumination-light emitting means is used for all the keys.
On the other hand, with respect to the plurality of LEDs, although it is possible to make a color of the LED in one area and a color of the LED in another area different, some keytops may be illuminated with a mixed color of the plural colors of illumination light, thus making a problem that the predetermined different colors of illumination light cannot be provided to the keytops of the different areas, and a decorative product cannot be obtained.

### Disclosure of the Invention

In order to solve the aforementioned problems, an object of the present invention is to provide a key sheet having a plurality of pad portions provided on a key base made of a transparent or translucent resin and keytops provided on each of the pad portions, or a key unit using the key sheet, so that different colors of illumination light can be provided to the keytops of different areas.

According to one aspect of a key sheet of the present invention, there is provided a key sheet having a plurality of pad portions provided on a key base made of a transparent or translucent resin and a plurality of keytops provided on the pad portions, wherein: the key base is divided into a plurality of areas which includes one or more pad portions; light-blocking portions are provided to boundary regions between the adjacent areas of the key base; at least one illumination-light emitting means arrangement portion is provided so as to correspond to each of the areas; and reflecting means which directs light emitted from illumination-light emitting means provided in the illumination-light emitting means arrangement portion and guided through the key base toward keytop-formed side are entirely or partially arranged in each of the areas of the key base.

According to one aspect of a key unit of the present invention, there is provided a key unit, at least comprising: the key sheet as described above; a circuit board on which the key sheet is disposed; switching devices which are arranged at positions corresponding to the pads of the key sheet on the circuit board and switched by manipulation of the keytops on the pads; and illumination-light emitting means which are arranged in the illumination-light emitting means arrangement portion on the circuit board.

According to one aspect of a method of manufacturing a key sheet of the present invention, there is provided a method of manufacturing a key sheet, comprising: providing insertion bodies which constitute light-blocking portions in a mold; injecting a resin which is to be a key base into the mold; and solidifying the injected resin, thereby manufacturing the key base having the light-blocking portions composed of the insertion bodies.

According to another aspect of a method of manufacturing a key sheet of the present invention, there is provided a method of manufacturing a key sheet, comprising: forming a resin layer made of a transparent or translucent resin which is to be a key base on a carrier base; selectively forming holes in the resin layer; and injecting a resin constituting light-blocking portions into the holes, thereby manufacturing the key base.

### Brief Description of the Drawings

FIG. 1 is a perspective exploded view of a first embodiment of the present invention.
FIG. 2 is a cross-sectional view of the first embodiment.
FIG. 3 is a perspective exploded view of a second embodiment of the present invention.
FIG. 4 is a cross-sectional view of the second embodiment.
FIGS. 5(A) to 5(D) are cross-sectional views illustrating processes of a method of manufacturing a reinforcing portion of a key base according to a third embodiment of the present invention.
FIGS. 6(A) to (D) are cross-sectional views illustrating processes of a method of manufacturing a reinforcing portion of a key base according to a fourth embodiment of the present invention.
FIG. 7 is a cross-sectional view illustrating a reinforcing portion of a key base according to a fifth embodiment of the present invention.
FIG. 8 is a cross-sectional view illustrating a reinforcing portion of a key base according to a sixth embodiment of the present invention.
FIGS. 9(A) and 9(B) illustrate a seventh embodiment of the present invention, wherein FIG. 9(A) is a schematic plan view illustrating a plan position relationship of a key base, areas thereof, a circuit board, and illumination-light emitting means (LEDs) and FIG. 9(B) is a cross-sectional view thereof.
FIG. 10 is a cross-sectional view illustrating a conventional art.

### Detailed Description of the Invention

### General Description

According to a first embodiment of a key sheet of the present invention, there is provided a key sheet having a plurality of pad portions provided on a key base made of a transparent or translucent resin and a plurality of keytops provided on the pad portions, wherein: the key base is divided into a plurality of areas which includes one or more pad portions; light-blocking portions are provided to boundary regions between the adjacent areas of the key base; at least one illumination-light emitting means arrangement portion is provided so as to correspond to each of the areas; and reflecting means which directs light emitted from illumination-light emitting means provided in the illumination-light emitting means arrangement portion and guided through the key base toward keytop-formed side are entirely or partially arranged in each of the areas of the key base.

According a second embodiment of a key sheet of the present invention, the reflecting means are selectively arranged in a partial region of each area.
According a third embodiment of a key sheet of the present invention, a density of the reflecting means arranged in each of the areas is increased in proportion to a distance of the reflecting means from the illumination-light emitting means corresponding to the area.
According a fourth embodiment of a key sheet of the present invention, the reflecting means comprises concave portions provided to a rear surface of the key base which is made of a transparent or translucent resin. If the concave portion has a reflecting function, a small concave portion which is referred to as a "fine wrinkle" or a large concave portion may be used.

According a fifth embodiment of a key sheet of the present invention, the reflecting means comprises coating layers provided to a rear surface of the key base which is made of a transparent or translucent resin.
According a sixth embodiment of a key sheet of the present invention, the key base includes holes which are formed in boundary regions between the adjacent areas, and the holes are filled with a non-translucent resin which constitutes the light-blocking portion.

According a first embodiment of a key sheet of the present invention, there is provided a key unit, at least comprising: the key sheet as described above; a circuit board on which the key sheet is disposed; switching devices which are arranged at positions corresponding to the pads of the key sheet on the circuit board and switched by manipulation of the keytops on the pads; and illumination-light emitting means which are arranged in the illumination-light emitting means arrangement portion on the circuit board.

According a first embodiment of a method of manufacturing key sheet of the present invention, there is provided a method of manufacturing a key sheet, comprising: fitting light-blocking portions as insertion bodies in a mold; injecting a resin which is to be a key base into the mold; and solidifying the injected resin, thereby manufacturing the key base having the light-blocking portions composed of the insertion bodies.
According a second embodiment of a method of manufacturing key sheet of the present invention, there is provided a method of manufacturing a key sheet, comprising: forming a resin layer made of a transparent or translucent resin which is to be a key base on a carrier base; selectively forming holes in the resin layer; and injecting a resin constituting light-blocking portions into the holes, thereby manufacturing the key base.

### Effect of the Invention

According to the first embodiment of the key sheet, since the key base is made of a transparent or translucent resin, the key base can be used as a light guiding means. Since the reflecting means which direct light emitted from the illumination-light emitting means toward the keytop-formed side are entirely or partially provided in each of the areas of the key base, the keytops can be illuminated with the light emitted from the illumination-light emitting means in each of the areas.
Since the key base is divided into the plurality of areas which includes one or more pad portions and the light-blocking portions are provided to the boundary regions between the adjacent areas of the key base, the keytops in each of the areas can be illuminated with the light emitted from the illumination-light emitting means in the area in a case where a key unit is constructed by assembling the key base on a circuit board, although different illumination-light emitting means are arranged in each area.
Accordingly, the colors of illumination light for the keytops in the different areas can be clearly different from each other without mixture of the colors.

According to the second embodiment of the key sheet, since the reflecting means are selectively arranged in a partial region of each area, the reflecting means are arranged in only the position where the key pads are provided in the areas, so that the light emitted from the illumination-light emitting means can be effectively used for illumination of the keytops.

According to the third embodiment of the key sheet, since a density of the reflecting means is increased in proportion to a distance of the reflecting means from the illumination-light emitting means arrangement portions, it is possible to prevent a decrease in intensity of illumination light caused by attenuation of the light during the propagation of the light emitted from the illumination-light emitting means, so that irregularity of the illumination light can be prevented in each of the areas.

According to the fourth embodiment of the key sheet, since the concave portions are provided to a rear surface of the key base, the light guided through the key base can be reflected by the concave portions toward the keytop side, so that the concave portions can be used as the reflecting means for reflecting the light toward the keytop-formed side.
In addition, since the concave portions can be formed by preparing a portion for forming concave portion in a mold used for molding the key base, it is possible to manufacture the key base without an increase in production cost.

According to the fifth embodiment of the key sheet, since the coating layers, for example, white coating layers are provided to a rear surface of the key base, the light guided through the key base can be reflected by the coating layers toward the keytop side, so that the coating layers can be used as the reflecting means for directing the light toward the keytop-formed side.
Since the coating layers can be formed by using a relatively simple method of printing them on the rear surface of the key base, it is possible to manufacture the key base without an increase in production cost.

According to the sixth, embodiment of the key sheet, since the holes are formed in the boundary regions between each of the adjacent areas of the key base and filled with a non-translucent resin, it is possible to implement light-blocking portions that entirely block leakage of light between the areas by the non-translucent resin.
Accordingly, the key base can be manufactured by using a relatively simple method of entirely coating a translucent resin which is to be the key base, forming an outer shape of the key base and the holes simultaneously though selective etching, and injecting a non-translucent resin into the holes by using a dispenser or the like.

According to the first embodiment of the key unit, since the key unit is constructed with any one of the key sheets as described above, it is possible to obtain an effect according to that key sheet.
According to the first embodiment of the method of manufacturing a key sheet, the key base having the light-blocking portions can be manufactured by using an insertion molding technique by injecting a translucent resin which is to be the key base in a mold which is provided with a member of the light-blocking portions as the insertion bodies.

According to the second embodiment of the method of manufacturing a key sheet, the key base can be manufactured by using a relatively simple method of entirely coating a translucent resin which is to be the key base, forming an outer shape of the key base and the holes simultaneously though selective etching, and injecting a non-translucent resin into the holes by using, for example, a dispenser or the like.

### Description of the illustrated embodiments

Hereinafter, embodiments of the present invention are described in detail with reference to the accompanying drawings.
In the embodiments, basically, a key base of a key sheet is divided into a plurality of areas including one or more pad portions, light-blocking portions are provided to boundary regions between the adjacent areas of the key base, at least one illumination-light emitting means arrangement portion is provided so as to correspond to each of the areas, and reflecting means which direct light emitted from illumination-light emitting means toward keytop-formed side are entirely or partially arranged in each of the areas of the key base. An all-silicon rubber or a thermoplastic elastomer can be preferably used as a material of the key base.
In addition, a hard silicon rubber or a thermoplastic elastomer can be preferably used as a material of the light-blocking portion which optically divides the adjacent areas. However, a metal or the like other than the resin may be used.

The key base can be manufactured by using an insertion molding technique by providing the light-blocking portion made of a hard resin, a metal, or the like in a mold as insertion bodies and injecting a resin constituting the key base body into the mold.
Alternatively, the key base can be manufactured by entirely coating a translucent resin, forming an outer shape of the key base and the holes simultaneously though selective etching, and injecting a non-translucent resin into the holes by using, for example, a dispenser or the like.

Concave portions or coating layers may be used as the reflecting means for directing the light emitted from the illumination-light emitting means toward the keytop-formed side. A preferable color of the coating layers is white.
Light emitting diodes (LEDs) are preferably used for the illumination-light emitting means which are mounted on a circuit board constituting a key unit, but the present invention is not limited thereto. One or a plurality of the illumination-light emitting means may be arranged in each of the areas. In case of a large area, the number of illumination-light emitting means may be preferably increased. A plurality of different illumination-light emitting means having different colors of light may be grouped as one illumination-light emitting means set for emitting a mixed color of illumination light, and one or a plurality of illumination-light emitting means sets may be provided according to a size of the area. For example, red, blue, and green LEDs are grouped as one LED set, and the one LED set or a plurality of the LED sets are provided to one area so as to obtain white illumination light.

### (Embodiment 1)

Hereinafter, embodiments of the present invention are described in detail.

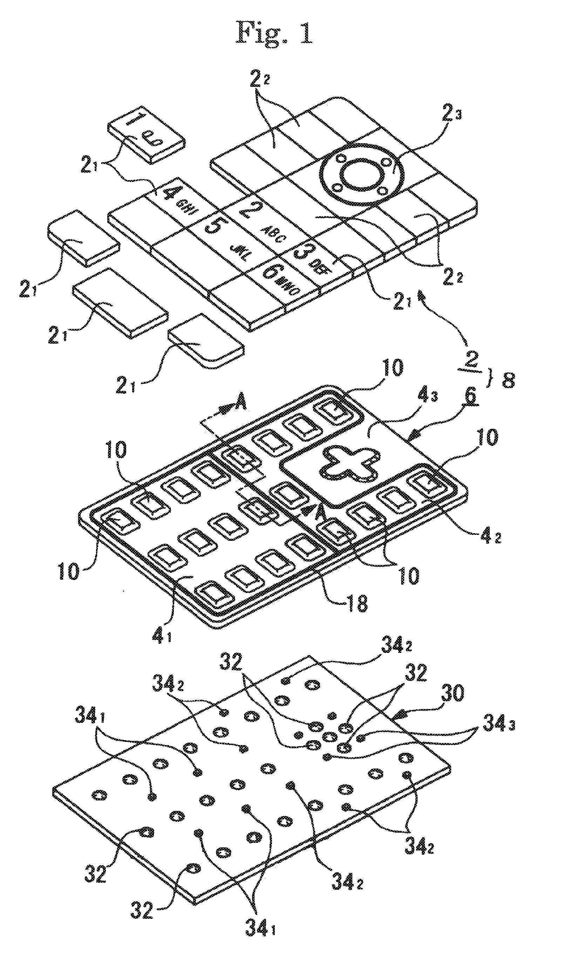

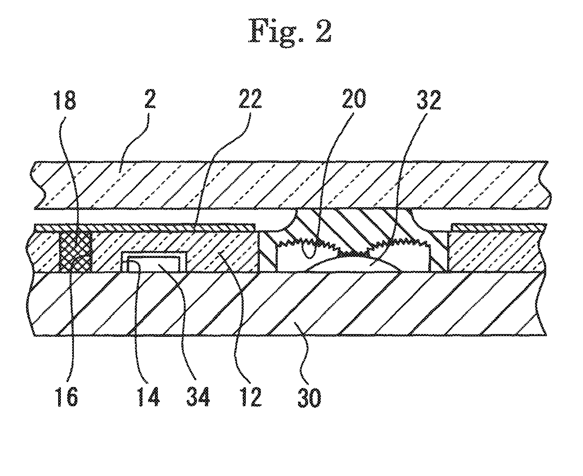

FIGS. 1 and 2 illustrate a first embodiment (Embodiment 1) of the present invention. FIG. 1 is a perspective exploded view of the embodiment, and FIG. 2 is a cross-sectional view thereof.
Reference number 2, 2, ... denotes keytops which are made of a translucent resin. More specifically, the keytop is made of, for example, polycarbonate (PC), polyethylene terephthalate (PET), or polymethyl methacrylate (PMMA). Reference number 2₁, 2₁, ... denotes the keytops 2, 2, ... that are located in a first area 4₁. Similarly, reference number 2₂, 2₂, ... denotes the keytops 2, 2, ... that are located in a second area 4₂, and reference number 2₃, 2₃, ... denotes the keytops 2, 2, ... that are located in a third area 4₃.

The areas 4₁, 4₂, and 4₃ are divided according to different colors of illumination light for the keytops 2, 2, .... Light-blocking portions (18) are provided to at least boundary regions between adjacent areas 4, 4, so that the areas 4, 4 are divided with the light-blocking portions (18). The light-blocking portions (18) are described later in detail.
Reference number 6 denotes a key base. The keytops 2, 2, ... and the key base 6 constitute a key sheet 8. Reference number 10, 10, ... denotes key pads (corresponding to pad portions in Claims) which constitute the key base 6. The key pads 10, 10, ... are provided to the corresponding keytops 2, 2, .... The key pads 10, 10, ... are made of an elastic resin such as a silicon rubber or a thermoplastic elastomer. The keytops 2, 2, ... are adhered on the corresponding key pads 10. Push members for the key pads 10, 10, ... are disposed on metal domes (32, 32, ...) which are provided on a surface of a circuit board (30) which is described later. Key switches are disposed in the metal domes (32, 32, ...).

Reference number 12 denotes reinforcing portions for the key base 6. The reinforcing portions 12 are made of a transparent or translucent region, for example, polyethylene terephthalate, polycarbonate, acryl, or the like. The reinforcing portions 12 and the key pads 10, 10, ... constitute the key base 6. Reference number 14, 14, ... denotes illumination-light emitting means arrangement concave portion (corresponding to illumination-light emitting means arrangement portions in Claims) which are provided to rear surfaces of the reinforcing portions 12 of the key base 6. The LEDs (34, 34, ...) as described later which are arranged on the surface of the circuit board (30) are inserted into the concave portions 14, 14,
Reference number 16 denotes holes which are formed in the reinforcing portions 12 of the key base 6. A non-translucent resin, for example, a hard silicon resin or various types of elastomer is injected into the holes 16, so that the injected resin constitutes the light-blocking portions 18. The light-blocking portions 18 are formed in the boundary regions between the aforementioned adjacent areas 4, 4 so as to optically separate the adjacent areas 4, 4. The light-blocking portions 18 may be formed by pattering the reinforcing portions 12 to form the holes 16 and injecting a resin into the holes 16. Alternatively, the light-blocking portions 18 may be formed by using a hard resin or a metal plate (which is separately prepared) through an insertion molding technique. The formation of the light-blocking portions 18 are described later in detail.

Reference numbers 20, 20, ... denotes a group of concave portions which are formed on the rear surfaces of the key pads 10, 10, .... The group of concave portions 20, 20, ... constitutes reflecting means which reflect light guided through the key base 6 (including the reinforcing portions 12 and the key pads 10) toward the keytops 2. If the group of concave portions 20, 20, ... are formed corresponding to positions where the key tops are to be illuminated, the concave portions 20, 20, ... can reflect the light toward the keytops at only the positions where the concave portions 20, 20, ... are formed. Accordingly, the light emitted from the later-described LEDs (34, 34, ...) can be effectively used for illumination.
Reference number 22 denotes a mask sheet which covers the reinforcing portion 12. The mask sheet 22 is composed of a light-blocking resin film or metal plate. Reference number 30 denotes the circuit board, whose surface is provided with various wiring layers for connecting key switches and LEDs (illumination-light emitting means) to a control circuit. In the figure, only the metal domes and the LEDs are shown, but other components are omitted.

Reference number 32, 32, ... denotes the metal domes which are provided on the circuit board 30 so as to correspond to the keytops 2, 2, .... In addition, contact points (not shown) are provided on the circuit board 30 so as to correspond to the metal domes 32, 32, ....
Reference number 34, 34, ... denotes the LEDs (corresponding to illumination-light emitting means in Claims) which are arranged on the circuit board 30. Reference number 34₁, 34₁, ... denotes the LEDs that are used to illuminate the keytops 2, 2, ... in the first area 4₁. Similarly, reference number 34₂, 34₂, ... denotes the LEDs that are used to illuminate the keytops 2, 2, ... in the second area 4₂, and reference number 34₃, 34₃, ... denotes the LEDs that are used to illuminate the keytops 2, 2, ... in the third area 4₃. The LEDs 34₁, 34₂, and 34₃ emit different colors of light. For example, the LEDs 34₁, 34₂, and 34₃ may emit red, blue, and green light, respectively.

According to the embodiment, the LEDs 34₁, 34₂, and 34₃ provided to the illumination-light emitting means arrangement concave portions 14, 14, ... in the different areas 4₁, 4₂, and 4₃ of the reinforcing portion 12 of the key base 6 emit different colors of light as described above. The light emitted from the LEDs 34, 34 in each of the areas 4₁, 4₂, and 4₃ is guided through the reinforcing portions 12 and the key pads 10 and reflected by the concave portions 20 formed on the rear surfaces of the key pads 10 toward the keytops 2, so that the light is used for illumination.
Therefore, the keytops 2₁, 2₂, and 2₃ in the first, second, and third areas 4₁, 4₂, and 4₃ are illuminated with red, blue, and green light, respectively.
Accordingly, the keytops 2, 2, ... in the different areas 4₁, 4₂, and 4₃ can be illuminated with different colors of light.

In addition, in the boundary regions between the adjacent areas 4₁, 4₂, and 4₃, the light is blocked by the aforementioned light-blocking portions 18, so that the light-blocking portions 18 can prevent a mixture (a mixed color) of the different colors of light emitted from the LEDs 34, 34 in the different areas 4, 4.
Therefore, the different areas can be provided with different colors without a mixed color. In addition, only the arbitrary area(s) among the adjacent areas 4₁, 4₂, and 4₃ may be selectively illuminated.

### (Embodiment 2)

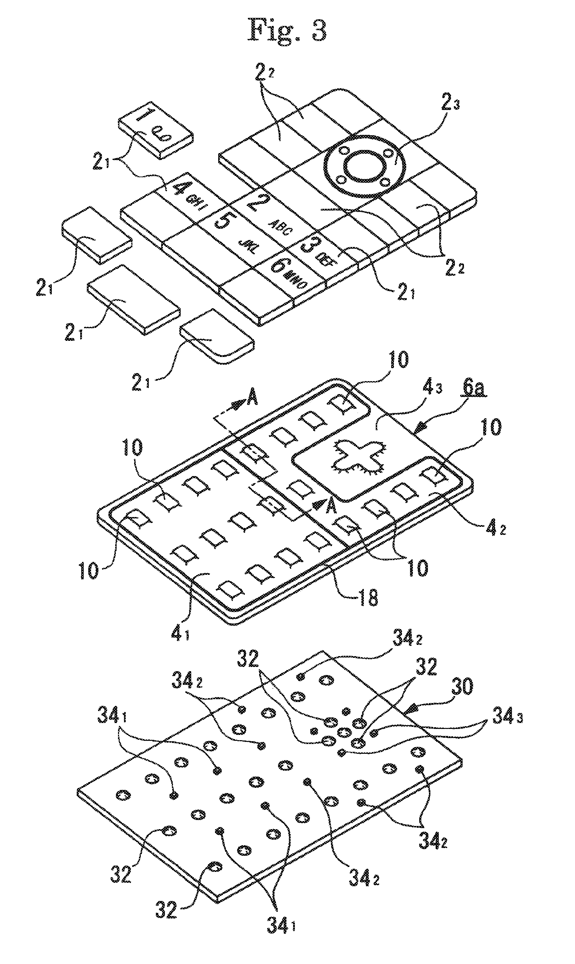

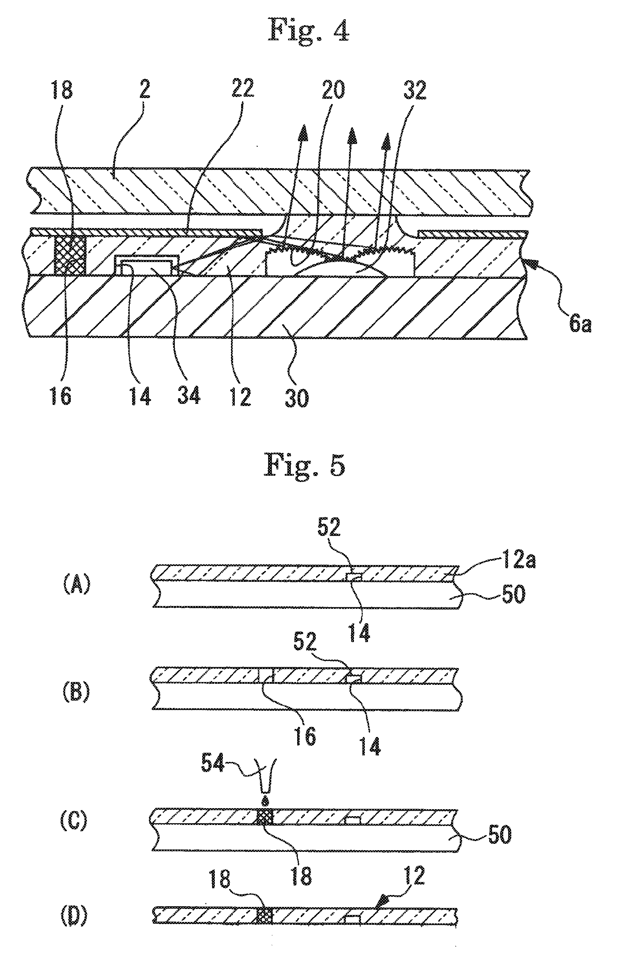

FIGS, 3 and 4 illustrate a second embodiment (Embodiment 2) of the present invention. FIG. 3 is a perspective exploded view of the embodiment of the present invention. FIG. 4 is a cross-sectional view thereof.
The embodiment is different from the first embodiment in that all the portions (key pad portions and reinforcing portions) of the key base except for the light-blocking portions are integrally made of a resin such as a silicon rubber or an elastomer resin, but the other components are the same. The same components are denoted by the same reference numbers, and detailed description thereof is omitted. Hereinafter, only the difference is described in detail with reference to FIGS. 3 and 4.

Reference number 6a denotes a key base in which the key pad portions and the reinforcing portions are integrally made of the same resin, for example, a silicon rubber or an elastomer resin. However, only the light-blocking portions 18 are made of a different resin or metal having non-translucency.
The key base 6a provided with the light-blocking portions 18 may be manufactured by using the same method as that of manufacturing the reinforcing portions 12 of the key base 6 according to the first embodiment.

### (Embodiment 3)

FIGS. 5(A) to 5(D) are cross-sectional views illustrating processes of an example (a third embodiment; Embodiment 3) of a method of manufacturing the reinforcing portions 12 of the key base 6 according to the first embodiment of the present invention.
(A) A carrier base 50 made of, for example, a resin is prepared. On a surface of the carrier base 50, protrusions 52, 52, ... where the illumination-light emitting means arrangement concave portions 14, 14, ... are to be arranged are formed at each of positions where the LEDs 34, 34, ... are to be arranged.
The carrier base 50 is entirely coated with a resin layer 12a for formation of the reinforcing portions by using, for example, spin-coating, and the resin is cured by using UV-light illumination or the like. Herein, the resin layer 12 is made of, for example, a UV-cured resin or the like with a thickness of about 0.3 mm to 2 mm. Reference number 14, 14, ... denotes the illumination-light emitting means arrangement concave portions which are provided to a rear surface of the resin layer 12a. FIG. 5(A) illustrates a state after formation of the resin layer 12a for formation of the reinforcing portions.

(B) In the next place, as shown in FIG. 5(B), the resin layer 12a for formation of the reinforcing portions is selectively etched so as to form the holes 16, 16, ... at positions where the light-blocking portions 18 are to be formed.
(C) In the next place, as shown in FIG. 5(C), a resin which is liquid at room temperature, for example, a black-colored silicon resin or the like is injected into the holes 16, 16, .., by using a resin dispenser 54. Subsequently, the resin filled in the holes 16, 16, ... is cured so as to form the light-blocking portions 18 having a thickness of, for example, 0.3 mm to 2 mm.
(D) In the next place, as shown in FIG. 5(D), the carrier base 50 is peeled off.
As a result, the reinforcing portions 12 of the key base 6 where the light-blocking portions 18 are formed can be obtained.
In addition, the manufacturing method of the embodiment can be employed to manufacture the key base 6a of the second embodiment shown in FIGS. 3 and 4.

### (Embodiment 4)

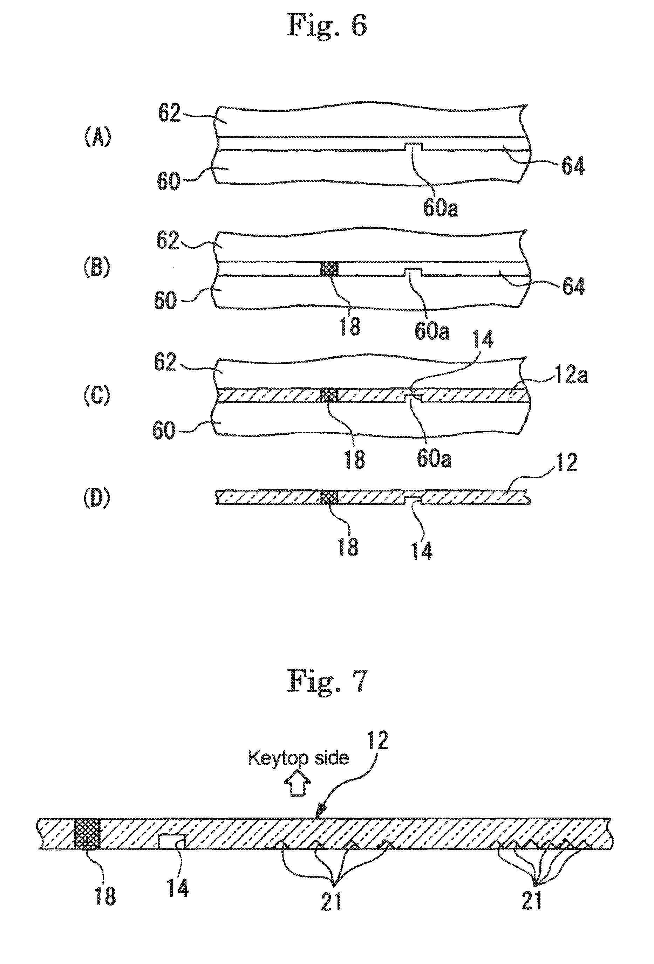

FIGS. 6(A) to 6(D) are cross-sectional views illustrating processes of another example (a fourth embodiment; Embodiment 4) of a method of manufacturing the reinforcing portions 12 of the key base 6. In the example, an insertion molding technique is used.
(A) As shown in FIG. 6(A), a mold including an upper mold 60 and a lower mold 62 is prepared for insertion molding.
(B) In the next place, as shown in FIG. 6(B), a mold interstice 64 of the mold for the insertion molding is provided with the light-blocking portions 18 made of a hard resin or the like as insertion bodies.

(C) In the next place, as shown in FIG. 6(C), a resin 12a for formation of the reinforcing portion of the carrier base 50 is injected into the mold interstice 64.
(D) In the next place, the resin 12a is solidified so as to be the reinforcing portion 12. Subsequently, the molds 60 and 62 are opened, and the reinforcing portion 12 is ejected. FIG. 6(D) illustrates the ejected reinforcing portion 12.
In this manner, the reinforcing portions 12 of the key base 6 can be manufactured by using the insertion molding technique.
In addition, the manufacturing method of the embodiment can also be employed to manufacture the key base 6a of the second embodiment shown in FIGS. 3 and 4.

### (Embodiment 5)

FIG. 7 is a cross-sectional view illustrating another example (a fifth embodiment of the present invention; Embodiment 5) of the reinforcing portion 12 of the key base 6. In the example, a density of concave portions 21, 21, ... formed on the rear surface of the reinforcing portion 12 to constitute the reflecting means is designed to be increased in proportion to a distance of the concave portions 21, 21, ... from the illumination-light emitting means arrangement concave portion 14.
According to the embodiment, in a case where a key unit is constructed by assembling a key sheet 8 using the key base 12 on the circuit board 30, it is possible to prevent a decrease in intensity of illumination light caused by attenuation of the light during the propagation of the light emitted from the illumination-light emitting means, that is, the LEDs 34 (see FIG. 2), so that irregularity of the illumination light can be prevented in the areas 4.
The technical idea according to the embodiment that the density of concave portions 21, 21, ... is designed to be increased in proportion to the distance of the concave portions from the positions where the LEDs 34 are arranged can be employed to a type of a key base where the key pad portions and the reinforcing portions are integrally formed.

### (Embodiment 6)

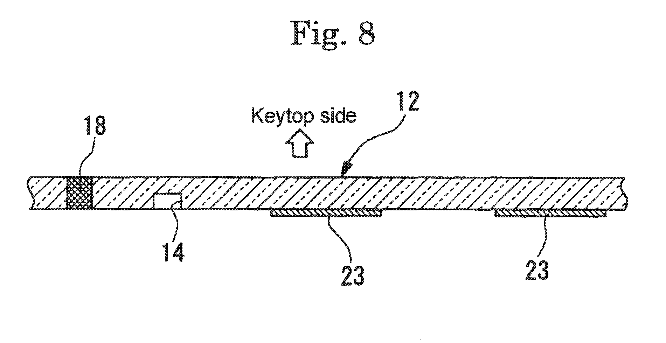

FIG. 8 is a cross-sectional view illustrating still another example (a sixth embodiment of the present invention; Embodiment 6) of the reinforcing portions 12 of the key base 6. In the embodiment, coating layers 23 having a color, for example, white are formed on a rear surface of the reinforcing portion 12.
Such white coating layers 23 irregularly reflect the light which is incident thereto, so that the coating layers 23 have a function of the reflecting means which irregularly reflect the light toward the keytops 2.
Therefore, in the embodiment, the coating layers 23 which are coated on the rear surface of the reinforcing portion 12 of the key base 6 are used as the reflecting means.
The technical idea according to the embodiment that the coating layers formed on the rear surface of the key base are used as the reflecting means can be employed to a type of a key base where the key pad portions and the reinforcing portions are integrally formed as shown in FIGS. 3 and 4.

### (Embodiment 7)

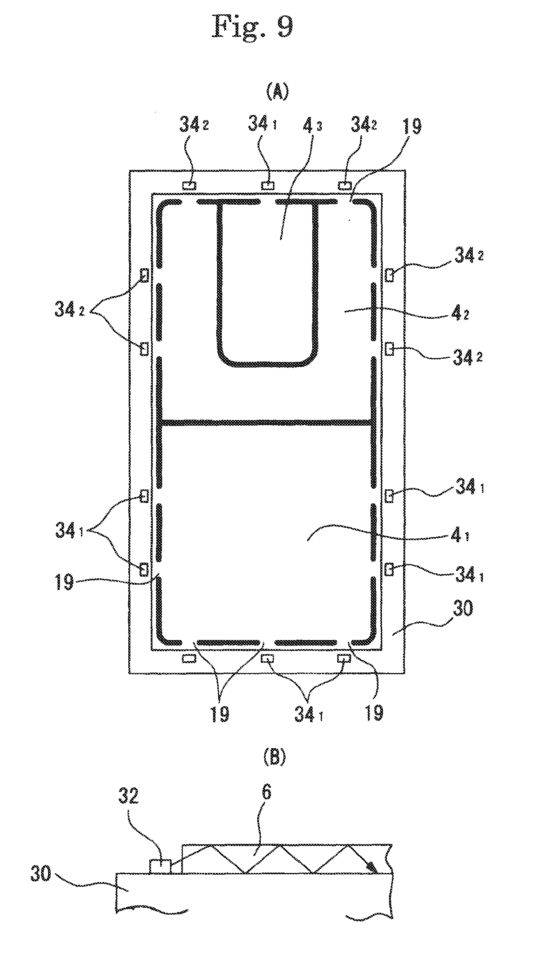

FIGS. 9(A) and 9(B) illustrate a seventh embodiment of the present invention, wherein FIG. 9(A) is a schematic plan view illustrating a plan position relationship of the key base 6, the areas 4, the circuit board 30, and the illumination-light emitting means (LEDs) 34 and FIG. 9(B) is a cross-sectional view thereof.
In the embodiment, the illumination-light emitting means (LEDs) 34, 34, ... are provided to side portions of the key base 6, and cutting portions 19 are provided to light-blocking portions 18 which divide the adjacent areas 4, 4. Therefore, the light emitted from the illumination-light emitting means (LEDs) 34 can be guided into the areas 4 through the cutting portions 19 which are provided to the light-blocking portions 18.

In this manner, the illumination-light emitting means (LEDs) 34 are not necessarily provided to the inside of the areas 41, 42, 43, but the illumination-light emitting means (LEDs) 34 may be arranged in the vicinity of the side portions of the key base 6.
The embodiment may be employed to a type of a key base where the key pad portions and the reinforcing portions are integrally formed as shown in FIGS. 3 and 4.
In this manner, the present invention can be implemented as various embodiments.

### Industrial Applicability

The present invention is applicable to an illumination-type key sheet used for an electronic apparatus, for example, a mobile phone, a PHS, a handheld terminal (PDA or the like), a portable audio apparatus, or an remote controller of home electric appliances and a key unit having the same, and a method of manufacturing the same.

### Reference Numbers

2: keytop
4 (4₁, 4₂, 4₃) : different areas corresponding to different colors of illumination light
6: key base
8: key sheet
10: pad portion (key pad)
12: reinforcing portion
14: illumination-light emitting means arrangement portion (illumination-light emitting means arrangement concave portion)
16: hole
18: light-blocking portion
19: cutting portion of light-blocking portion
20, 21, 23: reflecting means
30: circuit board
32: metal dome
34 (34₁, 34₂, 34₃): illumination-light emitting means (LED)

## Claims

1. A key sheet having a plurality of pad portions provided on a key base made of a transparent or translucent resin and keytops provided on each of the pad portions, wherein:
the key base is divided into a plurality of areas which includes one or more pad portions;
light-blocking portions are provided to boundary regions between the adjacent areas of the key base;
at least one illumination-light emitting means arrangement portion is provided so as to correspond to each of the areas; and
reflecting means which directs light emitted from illumination-light emitting means provided in the illumination-light emitting means arrangement portion and guided through the key base toward keytop-formed side are entirely or partially arranged in each of the areas of the key base.

2. The key sheet according to Claim 1, wherein the reflecting means are selectively arranged in a partial region of each area.

3. The key sheet according to Claim 1 or 2, wherein a density of the means arranged in each of the areas, which directs the light toward the keytop side, is increased in proportion to a distance of the means from the illumination-light emitting means corresponding to the area.

4. The key sheet according to any one of Claims 1 to 3, wherein the reflecting means comprises concave portions provided to a rear surface of the key base which is made of a transparent or translucent resin.

5. The key sheet according to any one of Claims 1 to 3, wherein the reflecting means comprises coating layers provided to a rear surface of the key base which is made of a transparent or translucent resin.

6. The key sheet according to any one of Claims 1 to 5, wherein the key base includes holes which are formed in boundary regions between the adjacent areas, and the holes are filled with a non-translucent resin which constitutes the light-blocking portion.

7. A key unit, at least comprising:
the key sheet according to any one of Claims 1 to 6;
a circuit board on which the key sheet is disposed;
switching devices which are arranged at positions corresponding to each of the pads of the key sheet on the circuit board and switched by manipulation of the keytops on the pads; and
illumination-light emitting means which are arranged in the illumination-light emitting means arrangement portion on the circuit board.

8. A method of manufacturing a key sheet, comprising:
providing insertion bodies which constitute light-blocking portions in a mold;
injecting a resin which is to be a key base into the mold; and
solidifying the injected resin, thereby manufacturing the key base having the light-blocking portions constituted with the insertion bodies.

9. A method of manufacturing a key sheet, comprising:
forming a resin layer made of a transparent or translucent resin which is to be a key base on a carrier base;
selectively forming holes in the resin layer; and
injecting a resin constituting light-blocking portions into the holes, thereby manufacturing the key base.
